Europäisches Patentamt

(19) European Patent Office

Office européen des brevets

(11) Publication number: **0 201 066**
**B1**

# (12) EUROPEAN PATENT SPECIFICATION

(45) Date of publication of the patent specification:
**19.04.89**

(51) Int. Cl.⁴: **B 65 G 53/50,** F 23 C 11/00

(21) Application number: **86106080.4**

(22) Date of filling: **02.05.86**

(54) **Pneumatic transportation system for transferring particulate material.**

(30) Priority: **09.05.85 SE 8502301**

(43) Date of publication of application:
**12.11.86 Bulletin 86/46**

(45) Publication of the grant of the patent:
**19.04.89 Bulletin 89/16**

(84) Designated Contracting States:
**DE FR GB IT**

(56) References cited:
**EP-A-0 040 708**
**AT-B-368 747**
**CH-A-443 135**
**SE-B-379 225**
**US-A-3 351 390**

(73) Proprietor: **ASEA STAL Aktiebolag, S-721 83**
**Västeras (SE)**

(72) Inventor: **Brännvall, Roine, Pirvägen 38, S-612 00**
**Finspäng (SE)**

(74) Representative: **Boecker, Joachim, Dr.- Ing.,**
**Rathenauplatz 2-8, D-6000 Frankfurt a.M. 1 (DE)**

LIBER, STOCKHOLM 1989

## Description

The invention relates to a pneumatic transportation system known in the art for transferring particulate material according to the precharacterising part of claim 1. The receiving unit may have a higher or a lower pressure than the storage container.

When transferring particulate material between spaces at different pressure levels, usually so-called lock hopper systems are used, consisting of two series-connected containers with valves in front of the first container, between the two containers and after the second container. For transferring material from a storage container under atmospheric pressure to a receiving unit under a higher pressure, material is transferred from the storage container to the first lock hopper container, which is then also under atmospheric pressure. The valve at the inlet is then shut and the container is pressurized. Thereafter the valve between the containers is opened and the material is transferred to the second pressurized container whereupon the valve between the container is shut and the valve after the second container is opened to empty the container and is shut again thereafter. The first container is relieved of pressure and the valve in front of the first container is opened to allow again material to be transferred from the storage container. A lock hopper system gives a discontinuous flow, unless it is supplemented with a rotary feeder after the last lock hopper container.

Various lock hopper systems and fuel feeding systems are described in a report from Argonne National Laboratory, 9700 South Cass Avenue, Argonne, Illinois 6043, October 1982, entitled "Discharge and Handling of Solids from Pressurized Fluidized-Bed Combustors", written by John E. Hanway Jr. and W.F. Padolski.

EP-A-40 708 describes a transportation system with material feeders of sluice type.

The invention aims to provide an improved transportation system of the above-mentioned kind, whereby the receiving unit is preferably under higher pressure than the storage container.

To achieve this aim the invention suggests a pneumatic transportation system according to the introductory part of claim 1 which is characterized by the features of the characterizing part of claim 1.

Further developments of the invention are characterized by the features of the additional claims.

The material feeder included in the transportation system according to the invention, can also replace a rotary feeder and therefore at the same time constitute a pressure sluice and a dosing feeder. The rotor has at least one material chamber. Between the end walls of the housing and the rotor there are cooperating sealing surfaces. In the upper end wall of the housing and the rotor there is an inlet opening to the material chamber and in the lower end walls thereof there is an outlet opening from the material chamber to a conveying pipe or container. The inlet openings and outlet openings of the housing and the rotor are positioned in alignment with each other at different angular positions of the rotor relative to the housing. During filling of a material chamber, the respective openings in the upper end walls are located in alignment with each other and the outlet is blocked. During emtying, the openings in the lower end walls are located in alignment with each other and the inlet is blocked. Between the material chamber in the rotor and the outlet opening in the lower end wall of the rotor there is a valve which serves as a material barrier between the material chamber and the outlet opening in the end wall. Suitably, the valve is a so-called L-valve in which the material flow is brought about by injection of gas. In addition to the blocking function, the valve may have a flow regulating function. The blocking function serves to prevent material from entering between the sliding surfaces in the lower end walls of the housing and the rotor.

The rotor is suitably formed with two material chambers, which are gas-tightly separated from each other, but one or several material chambers may also occur. A gas conduit for pressure gas, connected to the L-valve, for activation of a material flow through the L-valve communicates with a pressure gas source with a higher pressure level than in the corresponding unit when the outlet openings of the material chamber and the housing are located in alignment with each other. Alternatively, the rotor accommodates a space which is gas-tightly separated from the material chamber or gastightly separated from each material chamber and the surrounding housing, and there is a channel in the end wall of the rotor and another channel in the end wall of the housing, which channels are so arranged that their orifices are aligned with each other in the emptying position of the material chamber. In this position the defined space communicates with a pressure medium source with a pressure which is higher than that in the receiving unit. The supply line for pressure gas for activation of the L-valve communicates with this space and is thus supplied with pressure gas from said space. The housing communicates permanently, via a conduit, with the pressure gas source for transport gas. Thus, the rotor is surrounded by pressure gas.

The transportation system can advantageously be used in a power plant for feeding fuel from a storage container under atmospheric pressure into a pressurized fluidized bed in a combustion chamber, which is enclosed in a pressure vessel and is surrounded by compressed combustion air, a so-called PFBC plant. The transport device can hereby replace a conventional sluice system (lock hopper) or similar feeding systems. The pressure gas for transport and activation of the L-valve shall then have a higher pressure than the pressure in the combustion chamber. This gas may be taken from the pressure vessel or from the combustion chamber. In the latter case the gas is poor in oxygen, which reduces or eliminates the risk of ignition of the fuel in the transportation system and the risk of explosions. The pressure level in the afore-mentioned PFBC plant, for example, may be up to about 2 MPa (20 bar). Besides fuel, the transportation system may also supply sulphur absorbent and bed material into the fluidized bed, or may be used for feeding out bed material or separated ashes in such a plant.

Between the end walls of the rotor and the housing there are cooperating sliding surfaces. One of these sliding surfaces may be provided on an axially displaceable plate, which is supported by spring units so that a certain bearing pressure and a compensation for dimensional changes owing to thermal expansion and wear are obtained. This plate is provided with openings for feeding in and out particulate material and for the supply of pressure gas.

The invention will now be described in greater detail with reference to the accompanying drawings showing - by way of example - in

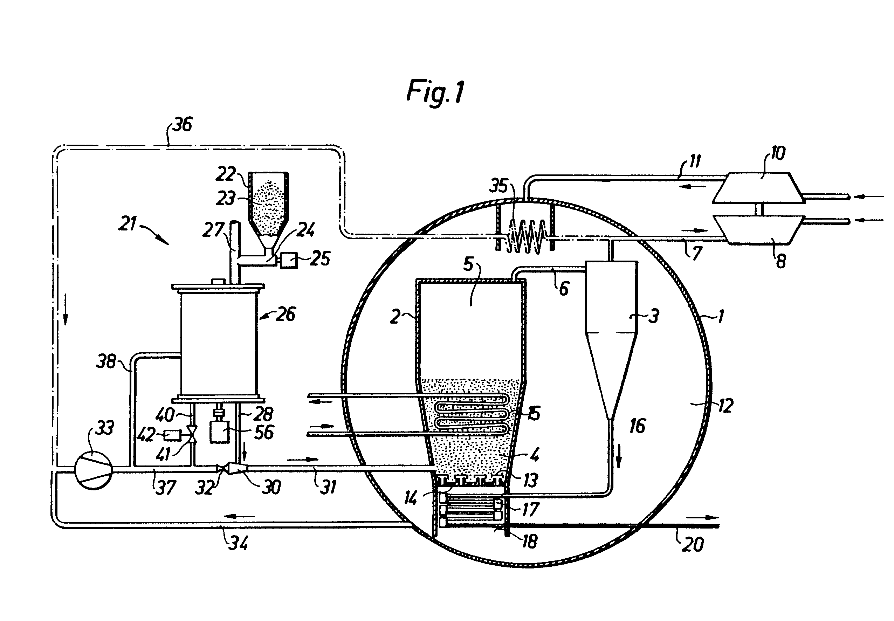

Figure 1    schematically a transportation system according to the invention utilized for feeding fuel or bed material in a pressurized fluidized bed,

Figure 2    a schematic section of the material feeder included in the transportation system of Figure 1, Figure 3    a section through a preferred embodiment taken along line III - III in Figure 5,

Figure 4    a bottom view taken in the direction of the arrows IV in Figure 3,

Figure 5    a section taken along line V - V in Figure 3,

Figures 6    and 7 schematic perspective views showing the rotor in its two operational positions.

In the figures, 1 designates a pressure vessel, in which are housed a combustion chamber 2 and a cleaner in the form of a cyclone 3. Only one cyclone 3 is shown, but physically there is a cleaning plant with a plurality of parallel groups of series-connected cyclones 3. Fuel is burnt in the fluidized bed in the combustion chamber 2. The combustion gases are collected in the freeboard 5 and flow through a conduit 6 to the cyclone 3, from where the combustion gases freed from dust are passed via a conduit 7 to a turbine 8 driving a compressor 10. The compressed combustion air is passed in the conduit 11 to the space 12 in the pressure vessel 1. The combustion air flows from space 12 via nozzles 13 at the bottom 14 of the combustion chamber 2 into the combustion chamber 2 and fluidizes the material in the bed 4. The bed 4 surrounds a tube bundle 15 in which steam is generated which may drives a steam turbine (not shown). The tube bundle 15 simultaneously cools the bed 4. The dust separated in the cyclone 3 is led through the conduit 16 to a cooled dust discharge device 17, which is cooled by the combustion air flowing through the shaft 18 to the nozzles 13. Through the conduit 20 the dust is transported to a collecting vessel (not shown).

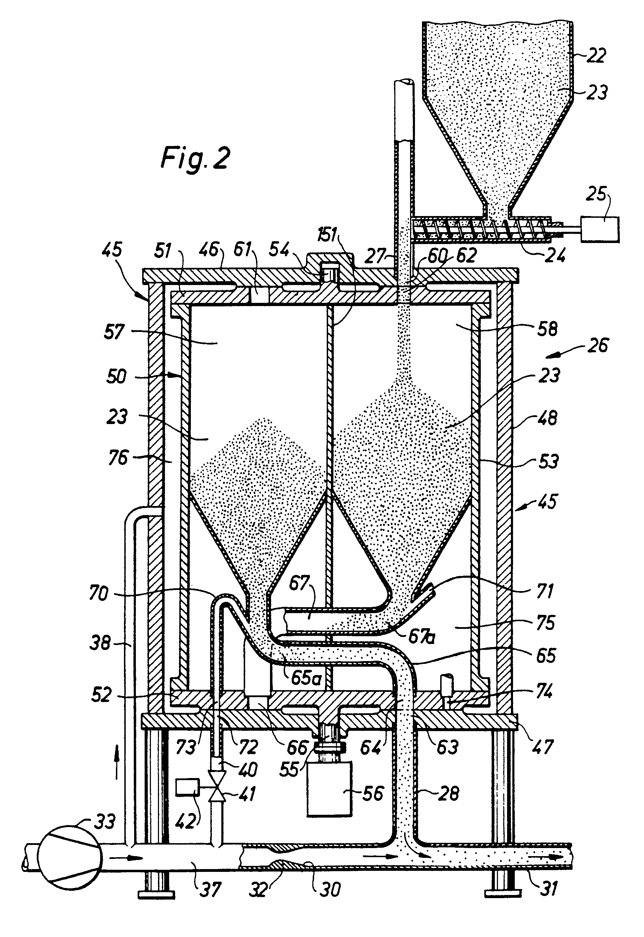

Fuel is supplied to the combustion chamber 2 by means of a pneumatic transportation system 21. This system comprises a fuel container 22 holding particulate fuel 23, for example crushed coal, which may possibly be mixed with sulphur absorbent, and a discharge device 24 shown as a worm conveyor (see Figure 2) driven by a motor 25 and supplying fuel to the material feeder 26 via the conduit 27. From the material feeder 26 fuel is led via the vertical tube 28 to the mixing location 30 for fuel and transport gas 30 and hence via a conveying pipe 31 to fuel nozzles (not shown) in the combustion chamber 2. The nozzle 32 upstream of the mixing location 30 is suitably a laval nozzle by which an essentially constant speed of the transport gas in the pipe 31 is obtained, independently of the pressure after the nozzle 32 if this pressure is lower than the pressure in front of the nozzle 32 by at least about 5 per cent. With other types of throttle means, a greater pressure difference would be required to ensure a constant speed of the transport gas in the pipe 31 at a varying pressure after the nozzle 32. Also, more compressor work would be required.

For compression of transport gas a booster compressor 33 is provided. It is connected, on the suction side, either to the space 12 in the pressure vessel 1 through a conduit 34, or to the conduit 7 from the cyclone 3 via a cooler 35 and a conduit 36. The cooler 35 is cooled by the compression air from the compressor 10, whereby the extracted heat is utilized for preheating the combustion air. Thus, in the latter embodiment a transport gas poor in oxygen is obtained, which reduces or eliminates any risk of explosions or fire in the fuel transportation system 21. The compressor 33 is connected to the mixing location 30 by means of the conduit 37. The material feeder 26 is connected to the conduit 37 by means of a first conduit 38 and a second conduit 40 the latter being provided with a regulating valve 41 with an operating device.

In the schematic embodiment according to Figure 2, the material feeder 26 comprises a housing 45 having a circular upper end wall 46, a lower end wall 47 and a cylindrical side wall 48. A rotor 50 is rotatably arranged in the housing 45. The rotor 50 comprises an upper end wall 51, a lower end wall 52 and a cylindrical side wall 53. The end walls 51, 52 of the rotor 50 are provided with shaft ends 54 and 55 which are journalled in the end walls 46, 47 of the housing 45. The rotor 50 is driven by a motor 56. The rotor 50 is formed with two chambers 57 and 58 for material. The upper end wall 46 of the housing 45 is provided with an axial inlet opening 60, which is connected to the conduit 27. The upper end wall 51 of the rotor 50 is provided with a first inlet opening 61 to the material chamber 57 and a second inlet opening 62 to the material chamber 58. The lower end wall 47 of the housing 45 is provided with an axial outlet opening 63, which is connected to the tube 28. The lower end wall 52 of the rotor 50 is provided with a first outlet opening 64, which is connected to the material chamber 57 by means of a conduit 65, and a second outlet opening 66, which is connected to the material chamber 58 by means of a conduit 67. These conduits 65 and 67 form so-called L-valves 64a and 67a. For activation of a material flow through the L-valves 65a and 67a, these valves are supplied with pressure gas through the conduits 70 and 71, respectively. The lower end wall 47 of the housing 45 is provided with an inlet opening 72 for pressure gas which is connected to the conduit 40. The lower end wall 52 of the rotor 50 is provided with two openings 73 and 74.

Figure 2 shows two different embodiments for connection of the L-valves to a pressure gas source. In the embodiment shown in the left hand part of the figure, the tube 70 is connected to the opening 73. In the embodiment shown in the right hand part of the figure, the tube 71 opens into a space 75 which is gas-tightly separated from the material chamber 58 and the housing 45, and the L-valve 67a is supplied with pressure gas via this space 75. The space 76 in the housing 45 around the rotor 50 communicates through the conduit 38 with the pressure gas conduit 37 and is thus under pressure.

The material feeder 26 operates as follows: In the shown position of the rotor 50 the inlet openings 60 and 62 and the outlet openings 63 and 64, respectively, are in alignment with each other, whereas the inlet opening 61 and the outlet opening 66 are closed by the end walls 46 and 47, respectively, of the housing 45. The L-valve 65a is supplied with activation gas from conduit 37 via the regulating valve 41, the conduit 40, the openings 72, 73 and the conduit 70, and the material chamber 57 is being emptied. The emptying rate can be regulated by regulating the gas flow to the L-valve 65a. The regulation can be performed by continuous regulation of the flow through the valve 41 or by pulsing of the gas flow by means of this valve 41. The inlet openings 60 and 62 are located in alignment with each other. The openings 66 and 74 are sealed by the lower end wall 47 of the housing 45. Material 23 from the container 22 is being fed via the screw feeder 24 to the vertical tube 27 and is falling through the openings 60 and 62 down into the material chamber 58 to fill it. In this position, the L-valve 67a has blocking function. When the chamber 57 has been emptied and the chamber 58 has been filled to the desired level, the rotor 50 is rotated so that the openings 60 and 61, the openings 63 and 66 and the openings 72 and 74, respectively, are in alignment with each other. The material chamber 58 is emptied and the material chamber 57 is filled. In this position, the gas for activation of the material flow is supplied through the L-valve 67a via the space 75. When any of the chambers 57 and 58 has been emptied and the rotor 50 rotated so that the inlet opening 61 or 62 of the emptied chamber is aligned with the opening 60 in the end wall 46, pressure gas flows out into the atmosphere via the tube 27, and the chamber will thus be relieved of pressure prior to the filling from the container 22.

To prevent the chamber 57 and 58 from flowing over and to control the emptying, transducers may be provided in the upper and lower parts of these chambers and in the rotor 50. These transducers may suitably be of radiation type. Another possibility of preventing overfilling is to arrange, above the material feeder 26, a dosing feeder which supplies the material chambers 57 and 58 a suitable amount of material during the filling period.

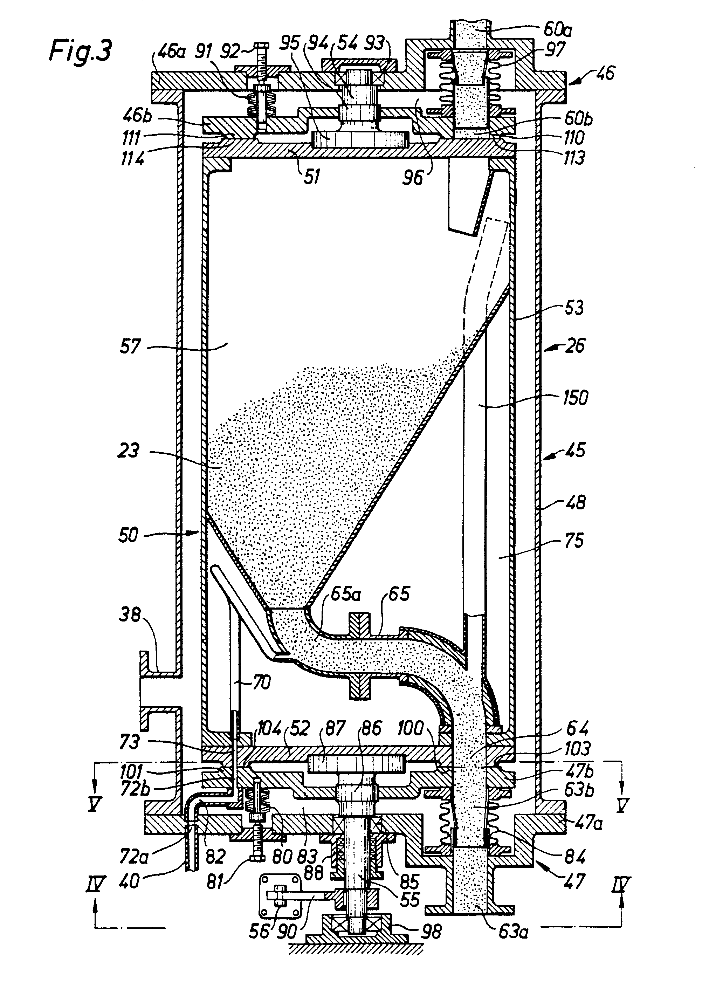

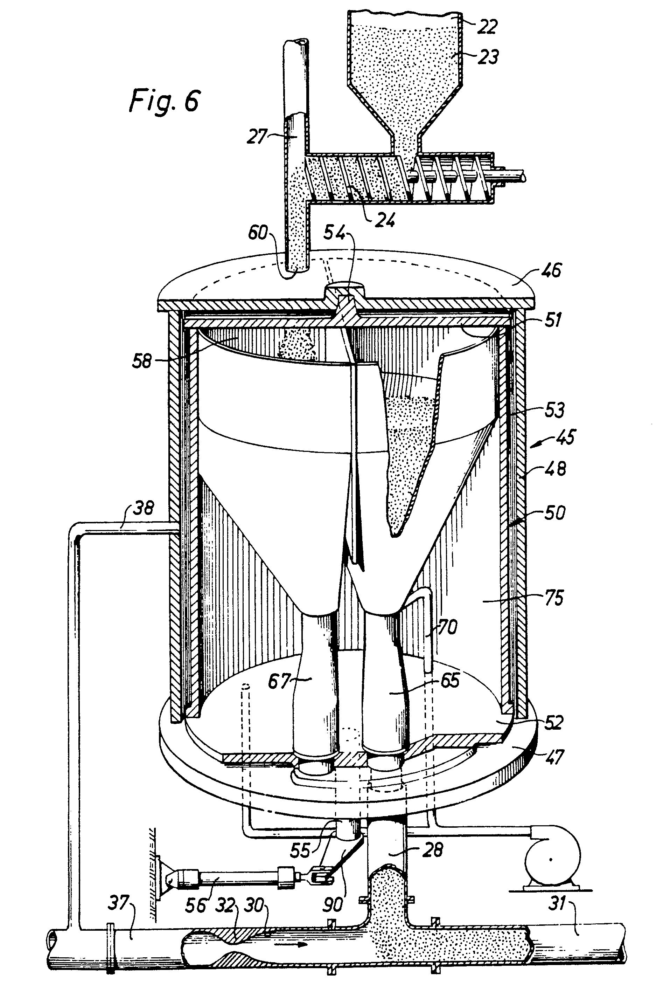

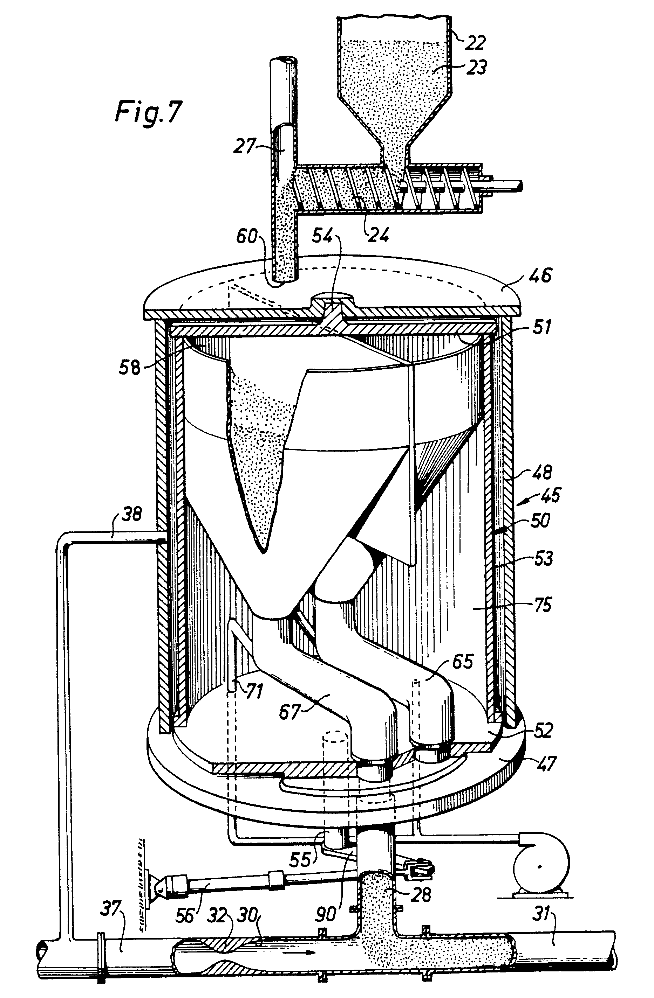

In the preferred embodiment shown in Figures 3 - 7, the bottom wall 47 of the housing 45 is formed with a part 47a, which is fixedly joined to the wall 48, and an axially limited movable part 47b, which is supported on a number of spring units 80 which are axially adjustable by means of bolts 81. The spring units 80 may be built up of cup springs. The part 47b is connected to the part 47a or to the wall 48 by means of devices (not shown) so as to prevent rotation. Between the opening 72a in the part 47a and the opening 72b in the part 47b there is an elastic pipe connection 82 which bridges the gap 83. Between the opening 63a in the parts 47a and 47b there is an elastic connection 84 in the form of a bellows which also bridges the gap 83. The shaft 55 is journalled in a bearing 85 in the part 47a, said bearing 85 being provided with a first flange 86 which constitutes a centering guide for the part 47b and with a second flange 87 by which it is joined to the lower end wall 52 of the rotor 50. The shaft 55 is surrounded by a stuffing box 88. The motor 56 consists of a double-acting operating cylinder - hydraulic or pneumatic - which is connected to the shaft 55 by means of an arm 90 which rotates the rotor 50 between two angular positions in relation to the housing 45.

The upper end wall 46 of the housing 45 is also made in two parts. Its outer part 46a is fixed to the wall 48 and its inner part 46b is arranged with limited axial movability but is connected to the part 46a or the wall 48 so as to be prevented from rotating. Between the parts 46a and 46b there are a number of spring units 91 which are adjustable by means of bolts 92 in the end wall part 46a. The shaft end 54 is journalled in the part 46a in a bearing 93. The shaft end 54 is provided with a first flange 94 which forms a radial guide for the part 46b and a second flange 95 by means of which shaft end is connected to the upper end wall 51 of the rotor 50. Between the openings 60a and 60b in the respective parts 46a and 46b there is a bellows 97 bridging the gap 96. The spring units 80 and 91 press the axially movable end wall parts 47b and 46b of the housing 45 against the end walls 52 and 51 of the rotor 50 with an appropriately adjusted force. The rotor 50 can be supported by the shaft end 55 and a thrust bearing 98 or by the end wall part 47a of the housing 45.

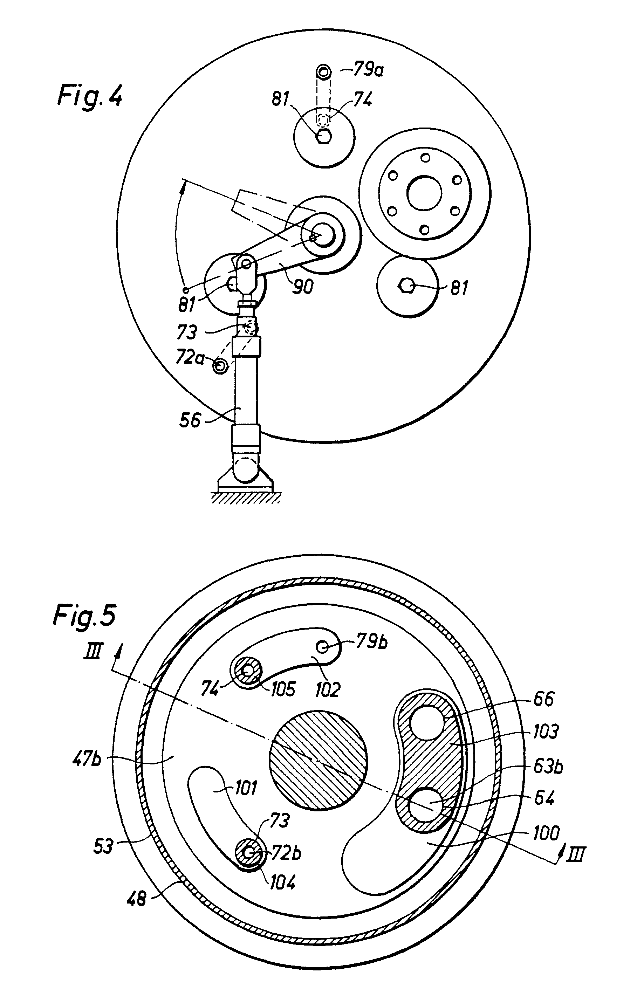

The upper part 47b of the lower end wall 47 of the housing 45 and the lower end wall 52 of the rotor 50 are formed with three "warts" 100, 101, 102, 103, 104, 105, protruding from the surfaces, (see Figures 3 and 5). The surface of these warts 100 - 105 slide against each other and form cooperating sealing surfaces. Figures 2, 3 and 5 show the position during emptying of the material chamber 57. The openings 63a and 64 and the openings 72b and 73, respectively, are then in alignment with each other, thus providing a free outlet for the material 23 and a free inflow of gas for activating of the L-valve 65a, respectively. When supplying propellant gas through the conduit 70, the material chamber 57 will be emptied. The emptying rate is regulated by means of the gas supply. This regulation can be achieved advantageously by pulsing of the gas flow by means of the valve 41. Through the pipe connection 150, equalization of the pressure is obtained between the tube 65 and the material chamber 57 when the rotor 50 is rotated to the position shown in Figure 3 and during the emtying. The opening 74 in the wart 105 is blocked by the wart 102, so that no connection exists between the conduit 40 and the material chamber 58 which is simultaneously filled. By forming the end wall 52 and the end wall part 47b with warts 100 - 105 with limited sliding surfaces, good sealing conditions are obtained. By providing a valve 65a in the conduit 65, the material 23 is prevented from flowing down into the lower part of the conduit 65 thus preventing wear of the sealing surfaces during rotation of the rotor 50. By maintaining the space 76 permanently pressurized, the risk of material entering between cooperating sealing surfaces of the warts 100 - 105 and causing wear damage, is reduced. Through the spring unit 80 such a possibility of movement of the part 47b is obtained that part 47b is permanently held in contact with the end wall part 52 in the rotor 50, even if a certain amount of wear should take place in the sealing surfaces.

The upper end wall 51 of the rotor 50 and the inner end wall part 46a of the housing 45 are formed in a similar manner with warts 110, 111, 112, 113 and 114 with cooperating sliding surfaces and openings. In addition to these four warts 110 - 114 there may be two more warts (not shown in the figures), one of which is placed on the end wall part 46b and the other on the end wall part 51, thus obtaining three points of contact and therefore good static stability.

For pressure compensation between the material chamber 57 and the outlet tube 65 and for emptying, as shown in Figure 3, there is a pipe connection 150 between the lower part of the tube 65 and the chamber 57. This pipe 150 is necessary for good functioning of the L-valve.

## Claims

1. Pneumatic transportation system for transferring particulate material (23) from a storage container (22) to a receiving unit (2) comprising a material feeder (26) with a closed vertically oriented housing (45) having an upper and a lower end wall (46, 47), a rotor (50) rotatably accommodated in said housing (45) and rotatable by a drive device (56), said rotor (50) having an upper and a lower end wall (51, 52) and at least one material chamber (57), sealing surfaces cooperating between the end walls (46, 51; 47, 52) of the housing (45) and the rotor (50), an inlet opening (60, 61) to the material chamber (57) in the upper end walls (46, 51) of the housing (45) and the rotor (50), respectively, and outlet opening (63, 64) from the material chamber (57) in the lower end walls (52, 47) of the rotor (52) and the housing (45), respectively, said openings (63, 64) arranged such that the inlet and outlet openings (60, 61; 63, 64), respectively, of the housing (45) and the rotor (50) are positioned in alignment with each other at different angular positions of the rotor (50) in relation to the housing (45), <u>characterized</u> in that a valve means (65a) is provided between the material chamber (57) and the outlet opening (64) of the rotor (50).

2. Transportation system according to claim 1, <u>characterized</u> in that the valve (65a) consists of a socalled L-valve or the like.

3. Transportation system according to claim 2, <u>characterized</u> in that in a gas supply conduit (40) for activation gas for the L-valve (65a) there is a regulating valve (41) for regulating the gas flow and hence also the material flow.

4. Transportation system according to any of the preceding claims, <u>characterized</u> in that the rotor (50) is formed with two or more material chambers (57, 58) which are gas-tightly separated from each other.

5. Transportation system according to any of claims 2 to 4, <u>characterized</u> in that a gas conduit (40, 70) connected to the L-valve (65a) for pressure gas for activation of the material flow through the L-valve (65a) communicates with a pressure gas source (33) the pressure of which is higher than that in the receiving unit (2) when the outlet openings (63, 64) of the material chamber (57) and the housing (45) are aligned with each other.

6. Transportation system according to any of the preceding claims, <u>characterized</u> in that a space (75) which is gas-tightly separated from the material chamber (58) and the surrounding housing (45) is provided in the rotor (50), said space (75), in the emptying position of the material chamber (58), communicating through channels (74, 72) in the end walls (52, 47) of the rotor (50) and the housing (45), respectively, with a pressure medium source (33) with a higher pressure than in the receiving unit (2).

7. Transportation system according to claim 6, <u>characterized</u> in that a supply conduit (40) for pressure gas for activation of the material flow through the L-valve (65a) communicates with said space (75).

8. Transportation system according according to any of the preceding claims, characterized in that a pressure compensating connection (150) is provided between the outlet conduit (65) from the material chamber (57) and the upper part of the material chamber (57).

9. Transportation system according to any of the preceding claims, characterized in that the housing (45) communicates permanently, via a conduit (38) with a pressure medium source (33) with a higher pressure level than in the material chamber (57).

10. Transportation system according to claim 2, characterized in that the receiving unit (2) is a combustion chamber in a pressure vessel (1), the transportation system connecting a storage container (22) for a fuel, a sulphur absorbent, or bed material with the combustion chamber, the pressure medium source (33) being a compressor which generates a pressure gas with a higher pressure than in the combustion chamber, this pressure gas serving for activation of a material flow through the L-valve (65a), for pressurization of said housing (45) which surrounds the rotor (50), and for transportation of the particulate material.

11. Transportation system according to claim 10, characterized in that the pressure medium source (33) is a booster compressor which increases the pressure of combustion air in the pressure vessel (1) or of inert combustion gases generated in the combustion chamber (2).

12. Transportation system according to any of the preceding claims, characterized in that the housing (45) accommodates at least one plate-like member (47b), supported by spring units (80), with a sliding surface cooperating with one end wall (52) of the rotor (50) and with an inlet or outlet opening (64) for material.

13. Transportation system according to claim 12, characterized in that the plate-like member (47b) has an opening (72b) for the supply of compressed air for activation of the valve means (65a) at the outlet of the material chamber (57) through a conduit (65), said opening (72b) being in alignment with an opening (73) in the end wall (52) of the rotor (50) in the emptying position of the material chamber (57).

**Patentansprüche**

1. Pneumatisches Transportsystem zur Überführung vom Partikelmaterial (23) von einem Vorratsbehälter (22) zu einer Empfangseinheit (2) mit einem Materialspender (26), der ein geschlossenes und in vertikaler Richtung orientiertes Gehäuse (45) mit einer oberen und einer unteren Stirnwand (46, 47) hat, mit einem drehbar in dem genannten Gehäuse (45) angeordneten Rotor (50), der von einem Antrieb (56) gedreht werden kann, wobei dieser Rotor (50) eine oberen und eine unteren Stirnwand (51, 52) hat und zumindest eine Materialkammer (57) besitzt, mit Dichtungsflächen zwischen den Stirnwänden (46, 51; 47, 52) des Gehäuses (45) und des Rotors (50), mit einer Eintrittsöffnung (60, 61) in die Materialkammer (57) in den oberen Stirnwänden (46, 51) des Gehäuses (45) beziehungsweise des Rotors (50) und mit Austrittsöffnungen (63, 64) aus der Materialkammer (57) in den unteren Stirnwänden (52, 47) des Rotors (52) beziehungsweise des Gehäuses (45), wobei diese Öffnungen (63, 64) derart angeordnet sind, daß die Eintrittsöffnungen (60, 61; 63, 64) des Gehäuses (45) beziehungsweise des Rotors (50) in verschiedenen Winkellagen des Rotors (50) relativ zum Gehäuse (45) miteinander fluchten, dadurch gekennzeichnet, daß zwischen der Materialkammer (57) und der Austrittsöffnung (64) des Rotors (50) eine Ventilvorrichtung (65a) angeordnet ist.

2. Pneumatisches Transportsystem nach Anspruch 1, dadurch gekennzeichnet, daß die Ventilvorrichtung (65a) aus einem sogenannten L-Ventil oder dergleichen besteht.

3. Transportsystem nach Anspruch 2, dadurch gekennzeichnet, daß das in einer Gaszuführungsleitung (40) für Betätigungsgas für das L-Ventil (65a) ein Regelventil (41) zur Regelung des Gasflusses und folglich auch des Materialflusses vorhanden ist.

4. Transportsystem nach einem der vorhergehenden Ansprüche, dadurch gekennzeichnet, daß der Rotor (50) zwei oder mehr Materialkammern (57, 58) besitzt, die gasdicht voneinander getrennt sind.

5. Transportsystem nach einem der Ansprüche 2 bis 4, dadurch gekennzeichnet, daß an das L-Ventil (65a) eine Gasleitung (40, 70) für die Zuführung von Druckgas zur Auslösung des Materialflusses durch das L-Ventil (65a) angeschlossen ist, mit einer Druckgasquelle (33) in Verbindung steht, deren Druck höher ist als der Druck in der Empfangseinheit (2), wenn die Austrittsöffnungen (63, 64) der Materialkammer (57) und des Gehäuses (45) miteinander fluchten.

6. Transportsystem nach einem der vorhergehenden Ansprüche, dadurch gekennzeichnet, daß ein Raum (75), der gasdicht von der Materialkammer (58) und dem umgebenden Gehäuse (45) getrennt ist, im Rotor (50) vorhanden ist, welcher Raum (75) in der Entleerungsstellung der Materialkammer (58) über Kanäle (74, 72) in den Stirnwänden (52, 47) des Rotors (50) beziehungsweise des Gehäuses (45) mit einer Druckmittelquelle (33) in Verbindung steht, deren Druck höher als der in der Empfangseinheit (2) ist.

7. Transportsystem nach Anspruch 6, dadurch gekennzeichnet, daß eine Versorgungsleitung (40) für Druckgas zur Aktivierung des Materialflusses durch das L-Ventil (65a) mit dem genannten Raum (75) in Verbindung steht.

8. Transportsystem nach einem der vorhergehenden Ansprüche, dadurch gekennzeichnet, daß eine druckkompensierende Verbindung (150) zwischen der Austrittsleitung (65) aus der Materialkammer (57) und dem oberen Teil der Materialkammer (57) vorhanden ist.

9. Transportsystem nach einem der vorhergehenden Ansprüche, dadurch gekennzeichnet, daß das Gehäuse (45) ständig über eine Leitung (38) mit einer Druckmittelquelle (33) in Verbindung steht, deren Druck höher ist als der in der Materialkammer (57).

10. Transportsystem nach Anspruch 2, dadurch gekennzeichnet, daß die Empfangseinheit (2) eine Verbrennungskammer in einem Druckgefäß (1) ist, wobei das Transportsystem einen Vorratsbehälter (22) für Brennstoff, Schwefelabsorbtionsmittel oder Bettmaterial mit der Brennkammer verbindet, daß die Druckmittelquelle (33) ein Kompressor ist, der ein Druckgas mit einem höheren Druck als in der Verbrennungskammer erzeugt, wobei dieses Druckgas zur Aktivierung des Materialflusses durch das L-Ventil (65a) dient, zur Unterdrucksetzung des den Rotor (50) umgebenden Gehäuses (45) und zum Transportieren des Partikelmaterials.

11. Transportsystem nach Anspruch 10, dadurch gekennzeichnet, daß die Druckmittelquelle (33) ein Verstärkerkompressor ist, der den Druck der Verbrennungsluft in dem Druckgefäß (1) oder den Druck der inerten Verbrennungsgasen, die in der Verbrennungskammer (2) erzeugt werden, verstärkt.

12. Transportsystem nach einem der vorhergehenden Ansprüche, dadurch gekennzeichnet, daß in dem Gehäuse (45) ein von einer Federeinheit (80) getragenes plattenförmiges Glied (47b) vorhanden ist, welches eine Gleitfläche zur Zusammenarbeit mit einer Endwand (52) des Rotors (50) und eine Eintritts- oder Austrittsöffnung (64) für Material hat.

13. Transportsystem nach Anspruch 12, dadurch gekennzeichnet, daß das plattenförmige Glied (47b) eine Öffnung (72b) fur die Zufuhr von komprimierter Luft zur Aktivierung der Ventilvorrichtung (65a) am Ausgang der Materialkammer (57) durch eine Leitung (65) hat, wobei diese Öffnung (72b) in der Entleerungsstellung der Materialkammer (57) mit einer Öffnung (73) in der Endwand (52) des Rotors (50) fluchtet.

## Revendications

1. Système de transport pneumatique pour transférer un matériau pulvérulent (23) d'un réservoir de stockage (22) jusqu'à un dispositif de réception (2), comprenant un dispositif d'alimentation en matériau (26) qui comporte un carter fermé (45) orienté verticalement, ayant une paroi d'extrémité supérieure et une paroi d'extrémité inférieure (46, 47), un rotor (50) logé de façon tournante dans le carter (45) et qui peut être mis en rotation par un dispositif d'entraînement (56), ce rotor (50) comportant une paroi d'extrémité supérieure et une paroi d'extrémité inférieure (51, 52) et au moins une chambre de matériau (57), des surfaces d'étanchéité qui coopèrent entre les parois d'extrémité (46, 51; 47, 52) du carter (45) et du rotor (50), une ouverture d'entrée (60, 61) dans la chambre de matériau (57), formée dans les parois d'extrémité supérieures respectives (46, 51) du carter (45) et du rotor (50) et une ouverture de sortie (63, 64) de la chambre de matériau (57), formée dans les parois d'extrémité inférieures respectives (52, 47) du rotor (52) et du carter (45), ces ouvertures (63, 64) étant disposées de façon que les ouvertures d'entrée et de sortie respectives (60, 61; 63, 64) du carter (45) et du rotor (50) soient placées en alignement mutuel dans différentes positions angulaires du rotor (50) par rapport au carter (45), caractérisé en ce qu'une vanne (65a) est placée entre la chambre de matériau (57) et l'ouverture de sortie (64) du rotor (50).

2. Système de transport selon la revendication 1, caractérisé en ce que la vanne (65a) consiste en une vanne dite en L ou d'un type similaire.

3. Système de transport selon la revendication 2, caractérisé en ce qu'une vanne de régulation (41) est incorporée dans un conduit d'alimentation en gaz (40) pour le gaz d'activation pour la vanne en L (65a) dans le but de réguler le débit de gaz et donc également lè débit de matériau.

4. Système de transport selon l'une quelconque des revendications précédentes, caractérisé en ce que le rotor (50) comprend au moins deux chambres de matériau (57, 58) qui sont mutuellement isolées de façon hermétique.

5. Système de transport selon l'une quelconque des revendications 2 à 4, caractérisé en ce qu'un conduit de gaz (40, 70) relié a la vanne en L (65a) pour le gaz sous pression destiné à l'activation de l'écoulement de matériau dans la vanne en L (65a) communique avec une source de gaz sous pression (33) dont la pression est supérieure à la pression qui existe dans le dispositif de réception (2), lorsque les ouvertures de sortie (63, 64) de la chambre de matériau (57) et du carter (45) sont mutuellement alignées.

6. Système de transport selon l'une quelconque des revendications précédentes, caractérisé en ce qu'un espace (75) qui est hermétiquement séparé de la chambre de matériau (58) et du carter (45) qui l'entoure, est formé à l'intérieur du rotor (50), et dans la position de vidage de la chambre de matériau (58), cet espace (75) communique par l'intermédiaire de canaux (74, 72) formés respectivement dans les parois d'extrémité (52, 47) du rotor (50) et du carter (45) avec une source de fluide sous pression (33) à une pression plus élevée que celle qui existe dans le dispositif de réception (2).

7. Système de transport selon la revendication 6, caractérisé en ce qu'un conduit d'alimentation (40) pour le gaz sous pression destiné à l'activation de l'écoulement de matériau dans la vanne en L (65a) communique avec l'espace précité (75).

8. Système de transport selon l'une quelconque des revendications précédentes, caractérisé en ce qu'un conduit de compensation de pression (150) est établi entre un conduit de sortie (65) de la chambre de matériau (57) et la partie supérieure de la chambre de matériau (57).

9. Système de transport selon l'une quelconque des revendications précédentes, caractérisé en ce que le carter (45) communique en permanence, par l'intermédiaire d'un conduit (38) équipé d'une source de fluide sous pression (33) avec une enceinte sous une pression supérieure à celle qui existe dans la chambre de matériau (57).

10. Système de transport selon la revendication 2, caractérisé en ce que le dispositif de réception (2) est une chambre de combustion dans une enceinte sous pression (1), le système de transport fait communiquer avec la chambre de combustion un réservoir de stockage (22) pour un combustible, un absorbant pour le soufre ou un matériau pour la formation de lit, la source de fluide sous pression (33) est un compresseur qui produit une pression de gaz de valeur supérieure à la pression qui existe dans la chambre de combustion, et cette pression de gaz est utilisée pour l'activation d'un écoulement de matériau dans la vanne en L (65a) pour la mise sous pression du carter (45) qui entoure le rotor (50) et pour le transport du matériau pulvérulent.

11. Système de transport selon la revendication 10, caractérisé en ce que la source de fluide sous pression (33) est un compresseur de surpression qui augmente la pression de l'air de combustion dans l'enceinte sous pression (1) ou de gaz de combustion inertes qui sont générés dans la chambre de combustion (2).

12. Système de transport selon l'une quelconque des revendications précédentes, caractérisé en ce que le carter (45) comporte au moins un élément en forme de plaque (47b) supporté par des dispositifs à ressort (80), avec une surface de glissement qui coopère avec une paroi d'extrémité (52) du rotor, et avec une ouverture d'entrée ou de sortie (64) pour le matériau.

13. Système de transport selon la revendication 12, caractérisé en ce que l'élément en forme de plaque (47b) comporte une ouverture (72b) pour fournir de l'air comprimé pour l'activation de la vanne (65a) à la sortie de la chambre de matériau (57), par l'intermédiaire d'un conduit (65) et cette ouverture (72b) est en alignement avec une ouverture (73) dans la paroi d'extrémité (52) du rotor (50) dans la position de vidage de la chambre de matériau (57).

Fig.1

# Fig. 2

Fig.3

Fig. 4

Fig. 5

Fig. 6

## Fig.7